# EUROPEAN PATENT APPLICATION

(11) **EP 1 790 707 A1**
(43) Date of publication of application: **30.05.2007**
(21) Application number: 05758336.1
(22) Date of filing: 07.07.2005
(51) Int. Cl.: C09K 11/08, C09K 11/59, H01J 11/02, H01J 29/20, H01J 31/12

(54) **PHOSPHOR, PROCESS FOR PRODUCING PHOSPHOR AND LUMINESCENT DEVICE**

(30) Priority: 23.07.2004 JP 2004215909; 23.07.2004 JP 2004215910
(71) Applicant: KABUSHIKI KAISHA TOSHIBA, Tokyo 105-8001 (JP)
(72) Inventor: YOKOSAWA, Nobuyuki, c/o Intellectual Property Div., Tokyo 105-8001 (JP); ONO, Yuuki, c/o Intellectual Property Div., Tokyo 105-8001 (JP); ITO, Takeo, c/o Intellectual Property Div., Tokyo 105-8001 (JP)
(74) Representative: HOFFMANN EITLE
(86) International application number: PCT/JP2005/012561
(87) International publication number: WO 2006/008974

(57) **Abstract**

A phosphor, comprising a manganese activated zinc silicate phosphor, is comprised of particles having a major-to-minor axis ratio of 1.0 to 1.4. A method for producing the phosphor, comprising burning a phosphor material containing elements constituting a host material of the phosphor and an activator or compounds containing the elements by heating in a heating furnace while flowing or rotating them to manganese activated zinc silicate phosphor particles having a major-to-minor axis ratio of 1.0 to 1.4. Another method for producing the phosphor, comprising burning phosphor material by heating in a heating furnace while flowing or rotating them to obtain a manganese activated zinc silicate phosphor having an afterglow time of less than 9 ms. Thus, a compact phosphor layer with high packing density can be formed, and there can be obtained a phosphor capable of high-luminance green light emission upon excitation by vacuum ultraviolet rays or low-voltage electron beams. Moreover, there can be obtained a manganese-activated zinc silicate phosphor capable of emission of green light of high luminance and short afterglow time upon excitation by vacuum ultraviolet rays or low-voltage electron beams.

## Description

### TECHNICAL FIELD

The present invention relates to a phosphor, a method for producing the phosphor and a light emitting device, and more specifically to a green phosphor which can be used suitably for display devices such as a plasma display panel (PDP), a field emission display (FED) and the like, a method for producing such a phosphor, and a light emitting device using the phosphor.

### BACKGROUND ART

Recently, a light emitting device using a vacuum ultraviolet ray having a short-wavelength of 147 nm, 172 nm or the like which is radiated by a discharge of a rare gas is being developed as an excitation source for the phosphor. In Such a light emitting device is used a phosphor which emits light with a vacuumultraviolet ray as an excitation source, namely a phosphor for excitation by the vacuum ultraviolet ray. The plasma display panel (PDP) is known as a display device using the light emission caused upon excitation by the vacuum ultraviolet ray.

The PDP has properties that it is a large and thin screen type and capable of making digital display and demanded for a display which is a core device of a digital network with the arrival of a multimedia era. And, it is being watched with interest as a digital display device capable of displaying a variety of information with a high degree of definition and high resolution.

The phosphor configuring a light emitting layer of such a PDP is conventionally produced by a method that phosphor material are charged together with flux into a crucible and burned (fired) by heating at a prescribed temperature (see, for example, Patent Document 1).

But, the phosphor obtained by the above method has a particle shape which is often an irregular shape similar to a polyhedron. And when it is used to prepare a paste for coating, the phosphor particles are poor in dispersibility, and aggregation tends to occur. Therefore, a light emitting layer which is compact and has high packing density and high luminance cannot be obtained. The phosphor layer easily has irregularities (concavities) on its surface, and the irregularities cause irregular reflection of the emitted light, so that there are problems that a loss of light increases to decrease emission luminance and also to cause variations in luminance.

Besides, the phosphor layer tends to have cavities in it and becomes thick to decrease a space volume of a discharge cell, so that there are problems that an ultraviolet dose for excitation of the phosphor decreases and luminance lowers.

To realize a full color display in the PDP, phosphors for individual colors blue, green and red for emitting light are required. As the green phosphor of the full color PDP, a manganese activated zinc silicate phosphor such as Zn₂SiO₄:Mn and a manganese activated alkaline earth aluminate phosphor such as (Ba, Sr)MgAl₁₀O₁₇:Mn are conventionally known. And, the manganese activated zinc silicate phosphor is mainly used as the green phosphor for excitation by vacuum ultraviolet rays because it is excellent in luminance characteristics and does not have much degradation (see, for example, Patent Document 2).

But, there is a problem that the phosphor having manganese such as Zn₂SiO₄:Mn as an activator has a long afterglow time. In this connection, it is known that the afterglow time can be decreased by increasing an amount of Mn for activation, but the afterglow time and the luminance are in a trade-off relation with each other, and the luminance lowers if the Mn concentration is increased. Therefore, it is an important issue for the manganese activated zinc silicate phosphor for excitation by vacuum ultraviolet rays that the afterglow time is decreased while suppressing the emission luminance from lowering.

To realize the PDPhavinghigh luminance, it is essential to increase luminous efficiency when the individual color phosphors are excited by vacuum ultraviolet rays, and it is especially important to increase the luminous efficiency of the green phosphor having high spectral luminous efficacy in order to improve white luminance. In this respect, it is strongly demanded to further improve the luminous efficiency of the manganese activated zinc silicate phosphor excited by vacuum ultraviolet rays.

As a thin type digital display device capable of displaying a variety of information with high resolution, a field emission display (FED) using an electron emission element such as a field emission type cold cathode device is also being studied and developed vigorously.

A gap between a face plate having a phosphor layer and a rear plate having the electron emission element of the FED has a very small size of one to several millimeters, and a high voltage of about 10 kV is applied to the narrow gap to form an intense electric field. Therefore, to improve the voltage resistance characteristic of the FED, it is desired to improve the surface smoothness of the phosphor layer as much as possible, and a phosphor layer, which is compact and has high packing density, has been demanded heretofore.

If the surface of the phosphor layer is not smooth enough, a metal back layer which is a light reflection film formed thereon has low smoothness and low luminance, and the phosphor layer surface has large irregular reflection, and ultraviolet rays for exposure are hard to enter into the phosphor layer. Therefore, there is a problem that it is hard to form a phosphor layer having sufficient thickness.

Besides, the FED has the same basic display principle as that of a cathode ray tube (CRT) and emits light by exciting the phosphor with an electron beam, but the electron beam has an acceleration voltage (excitation voltage) of 3 to 15 kV which is lower than that of the CRT, and an electric current density with the electron beam is high, so that the phosphor for the FED is not being studied fully.

Conventionally, as a green light emitting phosphor for the FED, it is known that a manganese activated zinc silicate phosphor (Zn₂SiO₄:Mn) has the same or higher level of luminance characteristics as that of a copper activated zinc sulfide phosphor (ZnS:Cu) having the highest luminance for the CRT.

Even if the above phosphor is used for the green light emitting phosphor for the FED, there is a problem that the manganese activated zinc silicate phosphor has a long afterglow time. Therefore, it is demanded to decrease the afterglow time while the manganese activated zinc silicate phosphor is suppressed from having lowering of luminance.

Besides, the FED is also demanded that white luminance is improved by improving luminance and color purity of a green phosphor having particularly high spectral luminous efficacy to realize light emission having high luminance and excelling in display characteristics such as color reproducibility.
Patent Document 1: JP-A 10-154466 (KOKAI)
Patent Document 2: JP-A 2002-038148 (KOKAI)

### DISCLOSURE OF THE INVENTION

The present invention has been made in view of the above circumstances and provides a green phosphor, which is compact and has high packing density, capable of obtaining light emission with high luminance. And, it provides a method for producing a phosphor that it is made possible to decrease an afterglow time while suppressing the luminance of the manganese activated zinc silicate phosphor from lowering. Besides, it provides a light emission display device such as a PDP or an FED excelling in luminance characteristics and display characteristics.

The present inventors have conducted repeated studies on the production of a manganese activated zinc silicate phosphor and found that almost spherical particles with a major-to-minor axis ratio of 1.0 to 1.4 could be obtained by burning the phosphor material by a rotary heating furnace. And, they found that the afterglow time can be shortened without degrading the luminance by burning the material for the manganese activated zinc silicate phosphor by the rotary heating furnace and completed the present invention.

A phosphor according to a first aspect of the invention comprises a manganese activated zinc silicate phosphor, wherein the manganese activated zinc silicate phosphor is comprised of particles having a major-to-minor axis ratio of 1.0 to 1.4.

A method for producing a phosphor according to a second aspect of the invention is a method for producing a phosphor which is comprised of a manganese activated zinc silicate phosphor, comprising burning a phosphor material containing elements constituting a host material of the phosphor and an activator or compounds containing the elements by heating in a heating furnace while flowing or rotating them to obtain manganese activated zinc silicate phosphor particles having a major-to-minor axis ratio of 1.0 to 1.4.

A method for producing a phosphor according to a third aspect of the invention is a method for producing a phosphor which is comprised of a manganese activated zinc silicate phosphor and emits green light upon excitation by vacuum ultraviolet rays, comprising burning a phosphor material containing elements constituting a host material of the phosphor and an activator or compounds containing the elements by heating in a heating furnace while flowing or rotating them to obtain a manganese activated zinc silicate phosphor having an afterglow time of less than 9 ms.

A method for producing a phosphor according to a fourth aspect of the invention is a method for producing a phosphor which is comprised of a manganese activated zinc silicate phosphor and emits green light upon excitation by electron beams having an acceleration voltage of 15 kV or less, comprising burning a phosphor material containing elements constituting a host material of the phosphor and an activator or compounds containing the elements by heating in a heating furnace while flowing or rotating them to obtain a manganese activated zinc silicate phosphor having an afterglow time of less than 9 ms.

A light emitting device according to a fifth aspect of the invention has a light emitting layer containing the phosphor according to the first aspect as a green phosphor.

A light emitting device according to a sixth aspect of the invention comprises a light emitting layer including the manganese activated zinc silicate phosphor produced by the method for producing a phosphor according to the third or fourth aspect as a green phosphor.

The phosphor of the invention comprises a manganese activated zinc silicate phosphor, and it is comprised of almost spherical particles having a major-to-minor axis ratio of 1.0 to 1.4, so that a homogeneous and compact phosphor layer with high packing density can be obtained. Therefore, when this phosphor is used to form a green phosphor layer, a PDP with high emission luminance upon excitation by vacuum ultraviolet rays and good light-emitting properties can be obtained. And, a phosphor layer having high emission luminance upon excitation with low-voltage electron beams having an acceleration voltage of 15 kV or less and excelling in surface smoothness and flatness can be formed, so that an FED having high luminance and excelling in voltage resistance characteristic can be obtained.

According to the producing process of the invention, the phosphor material are heated in a heating furnace while being flown or rotated by a rotating motion or the like of the furnace about its axis and efficiently applied with uniform thermal energy from the entire outer circumference of the phosphor material. As a result, burning can be completed in a shorter time in comparison with a conventional burning method using a crucible, and a manganese activated zinc silicate phosphor having an almost spherical particle shape with a major-to-minor axis ratio of 1.0 to 1. 4 and capable of making light emission with high luminance can be obtained.

According to the invention, the raw material for the manganese activated zinc silicate phosphor is heated while being flown or rotated within a heating furnace by a rotating motion or the like of the furnace about its axis and applied with uniform thermal energy from the entire outer circumference of the raw material. As a result, manganese activated zinc silicate phosphor particles having a homogeneous composition as a whole and good color purity can be obtained. Therefore, in comparison with those obtained by the conventional burning method using a crucible, the afterglow time of light emission caused upon excitation by vacuum ultraviolet rays or excitation with low-voltage electron beams becomes short. And, they have good color purity and sufficiently high luminance.

And, where a green phosphor layer is formed by using the manganese activated zinc silicate phosphor produced as described above, a PDP having a short afterglow time of green light emission caused upon excitation by the vacuum ultraviolet rays and good light-emitting properties can be obtained. And, where the green phosphor layer is formed by using this manganese activated zinc silicate phosphor, an FED having short afterglow time of green light emission caused upon excitation by low-voltage electron beams and sufficient high luminance can be obtained.

### BRIEF DESCRIPTION OF THE DRAWINGS

[FIG. 1] Fig. 1 is a diagram schematically showing an example of the burning apparatus for manufacturing a phosphor according to a first embodiment of the invention.
[FIG. 2] Fig. 2 is a sectional view schematically showing a structure of a PDP according to a second embodiment of the invention.
[FIG. 3] Fig. 3 is a sectional view schematically showing an FED according to a third embodiment of the invention.

### BEST MODE FOR IMPLEMENTING THE INVENTION

Then, embodiments of the invention will be described. It is to be understood that the invention is not limited to the following embodiments.

The phosphor of the first embodiment of the invention comprises a manganese activated zinc silicate phosphor which is substantially represented by a chemical formula Zn₂SiO₄:Mn. This phosphor is comprised of almost spherical particles with a major axis being maximum diameter to minor axis being minimum diameter ratio, namely an aspect ratio, in a range of 1.0 to 1.4. The aspect ratio is more desirably in a range of 1.0 to 1.1.

If the aspect ratio of the manganese activated zinc silicate phosphor particles exceeds 1.4, irregularities are easily formed on the surface of the phosphor layer formed by coating the phosphor. And, it is hard to obtain a compact phosphor layer with high packing density, emission luminance becomes low, and defects or uneven luminance is easily caused in the display device.

The manganese activated zinc silicate phosphor of the first embodiment can be produced by a process of burning by heating in a rotary heating furnace as described below.

Specifically, raw material powders including a phosphor material containing elements constituting a host material of the phosphor and an activator or compounds containing the elements are weighed so to have a desired composition (Zn₂SiO₄:Mn) and thoroughly mixed by a ball mill or the like. As the raw material powders, carbonate, nitrate, oxalate or hydroxide which can be easily decomposed to an oxide by heating can be used other than the oxide. Then, the obtained raw material mixture is supplied into a tubular heating furnace which rotates about its center axis (rotates on its axis) and heated to a prescribed burning temperature in the atmosphere. And, the phosphor material is heated for burning while being flown or rotated by the rotations of the heating furnace at a temperature of, for example, 1100 to 1300 °C for 0.5 to 4 hours. Then, the burned material is discharged from the heating furnace and cooled.

Such a burning method can also keep an inert gas atmosphere of argon, nitrogen or the like in the interior of the heating furnace. The heating furnace desirably has a rotating speed of 0.5 to 50 rotations per minute. If the rotating speed exceeds 50 rotations per minute, it is hard to control to a required burning time period. And, it can be configured to heat for a necessary and enough time period in a transfer process by disposing the heating furnace to incline with respect to a horizontal direction and continuously moving the phosphor material from above to below in the heating furnace. The inclined angle of the heating furnace with respect to the horizontal is desirably adjusted depending on the length and the rotating speed of the heating furnace to keep the phosphor material in the furnace for a time period sufficient for burning.

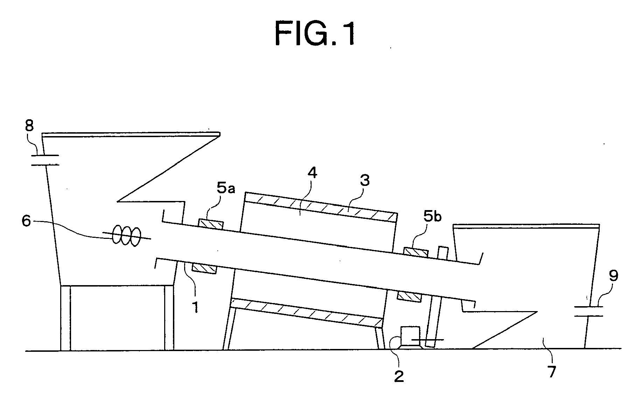

An example of the apparatus for burning the manganese activated zinc silicate phosphor of the first embodiment is shown in Fig. 1.

In Fig. 1, reference numeral 1 denotes a quartz or alumina round tubular heat resistant vessel. The heat resistant vessel 1 is disposed to incline with respect to the horizontal and configured to be rotated about the central axis by a rotating mechanism 2 such as a motor. And, the inclined angle of the heat resistant vessel 1 with respect to the horizontal is configured to be adjustable depending on a length and a rotating speed of a heating portion so that the phosphor material can be kept at the heating portion for an enough burning time period.

A heat generator 3 of molybdenum silicide or the like is disposed to cover the most of the exterior of the heat resistant vessel 1 from its top end so to configure a heating portion 4. The top and bottom ends of the heat resistant vessel 1, where the heat generator 3 is not disposed around them, are cooling portions 5a, 5b. Cooling is mainly performed by cooling with water.

A feeding mechanism (feeder) 6 for continuously feeding the phosphor material to be heated for burning is disposed at the top end portion of the heat resistant vessel 1, and a burned material collector 7 for continuously receiving the burned material is disposed at the bottomendportion of the heat resistant vessel 1 configuring the cooling portion 5b.

The atmosphere or inert gas is fed into the heat resistant vessel 1 through a gas introduction port 8 formed in the feeding mechanism 6. The fed atmosphere or inert gas flows together with the burned material within the heat resistant vessel 1 and discharged out through a gas discharge port 9 formed in the burned material collector 7. It is configured to thoroughly cool the burned material in the cooling portion 5b.

According to the burning method using such a apparatus, the phosphor material is heated while being flown or rotated within the tubular heating furnace, which is disposed to incline with respect to the horizontal and rotated about its axis, so that thermal energy is uniformly applied from the entire outer circumference. As a result, manganese activated zinc silicate phosphor particles having an almost spherical shape with an aspect ratio of 1.0 to 1.4 can be obtained. And, the burning can be completed in a shorter time period in comparison with the conventional burning method using a crucible. Besides, it is not necessary to perform additional pulverization after the burning because the phosphor particles can be suppressed from aggregating.

To form a green phosphor layer by using the phosphor of the first embodiment, the phosphor is mixed with a binder solution, which comprises, for example, polyvinyl alcohol, n-butyl alcohol, ethylene glycol, water or the like, to prepare a paste, which is then coated on a substrate by a method such as screen printing or the like. The phosphor layer can also be formed by a known slurry method. In the slurry method, the phosphor is mixed with pure water, polyvinyl alcohol, a photosensitivematerial suchas ammoniumdichromate, a surfactant and the like to prepare a phosphor slurry, the slurry being coated by a spin coater or the like and dried, an ultraviolet ray or the like being irradiated for exposure and development. Thus, a phosphor pattern is formed.

In a case where the phosphor of the first embodiment is used to prepare a paste, phosphor particles have good dispersibility and less aggregation among the particles, and the paste viscosity becomes low. This phosphor paste can be coated to form a phosphor layer which does not have many cavities in its interior and has a high packing density and a uniformly smooth surface without irregularity. Therefore, luminance of the PDP can be improved because irregular reflection of light emission from the phosphor is prevented. The PDP has a large discharge space when the phosphor layer is provided with a smooth surface, so that it is also advantageous for improvement of luminance.

The manganese activated zinc silicate phosphor of the first embodiment is suitable as a green phosphor for excitation by vacuum ultraviolet rays. The PDP having the green phosphor layer formed with the manganese activated zinc silicate phosphor of the first embodiment will be described.

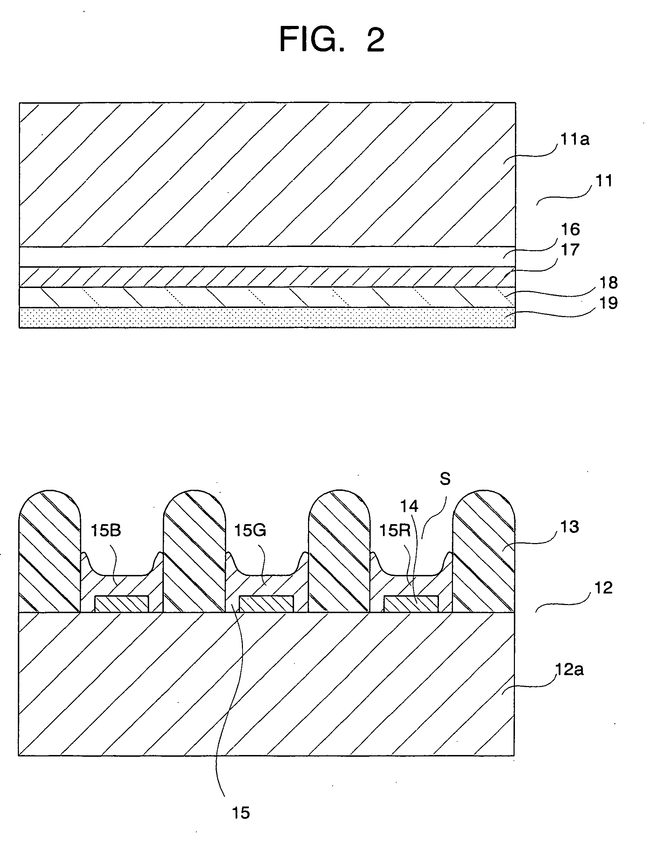

Fig. 2 is a sectional view schematically showing the structure of a PDP (AC plane discharge type PDP) according to the second embodiment of the invention. This PDP has a front substrate 11 and a rear substrate 12. The rear substrate 12 has a plurality of partition walls 13 which are disposed in parallel stripes on a rear glass substrate 12a, and stripe-shaped discharge cells S are formed by the partition walls 13. Stripe-shaped address electrodes 14 are disposed within the individual discharge cells S specified by the partition walls 13. And, phosphor layers 15 are respectively formed on the rear glass substrate 12a, the address electrodes 14 and the partition walls 13 within the individual discharge cells S.

The phosphor layers 15 have a blue phosphor layer 15B, a green phosphor layer 15G and a red phosphor layer 15R, and one of the color phosphor layers 15 is formed in the discharge cells S. The individual color phosphor layers 15 are arranged to be adjacent to one another.

As the green phosphor configuring the green phosphor layer 15G, the manganese activated zinc silicate phosphor comprised of the phosphor particles having the above-described aspect ratio of 1.0 to 1.4 is used. As the blue phosphor, BaMgAl₁₀O₁₇:Eu²⁺ or the like is used, and as the red phosphor, Y₂O₃:Eu, (Y, Gd)₂O₃:Eu, YBO₃:Eu, (Y, Gd)BO₃:Eu, GdBO₃:Eu and the like are used, but they are not exclusive.

To form the green phosphor layer 15G, the blue phosphor layer 15B and the red phosphor layer 15R, the manganese activated zinc silicate phosphor obtained in the first embodiment described above, or the above-described blue phosphor or red phosphor is mixed with a binder solution, which comprises, for example, polyvinyl alcohol, n-butyl alcohol, ethylene glycol, water or the like, to prepare a paste, which is then coated on a substrate by a method such as screen printing or the like. The individual color phosphor layers can also be formed by a known slurry method. In the slurry method, the respective color phosphors are mixed with pure water, polyvinyl alcohol, a photosensitive material such as ammonium dichromate, a surfactant and the like to prepare a phosphor slurry, the slurry being coated by a spin coater or the like and dried, an ultraviolet ray or the like being irradiated for exposure and development to form individual color phosphor patterns.

The front substrate 11 has a stripe-shaped transparent electrode 16 which is extended in a direction orthogonal to the address electrodes 14, and a bus electrode 17 which is formed on the transparent electrode 16 to decrease its electrical resistance formed on a front glass substrate 11a. And, a transparent dielectric layer 18 and a protection layer 19 are formed on the front glass substrate 11a to cover the transparent electrode 16 and the bus electrode 17. The protection layer 19 is formed of, for example, MgO and serves to improve discharge characteristics. The front substrate 11 is placed on the rear substrate 12 to provide sealing. A mixture gas such as He-Xe, Ne-Xe or the like is sealed in the discharge cells S formed between the rear substrate 12 and the front substrate 11.

This AC plane discharge type PDP operates as follows. A plane discharge occurs in the vicinity of the front substrate 11 within the discharge cells S, and a discharge gas mainly emits 147 nm- and 172 nm-wave length vacuum ultraviolet rays. The respective color phosphors in the phosphor layers 15 emit visible light when they are excited by the vacuum ultraviolet rays and return to the ground state.

To uniformly irradiate ultraviolet rays to the phosphor layer 15, the thickness of the phosphor layer 15 is desirably almost uniform at respective portions. If the thickness of the phosphor layer 15 is largely variable, there is a possibility of producing particles which are under the shadow of other phosphor particles and not exposed to the ultraviolet rays. The manganese activated zinc silicate phosphor particles having an aspect ratio of 1.0 to 1.4 of the first embodiment can be used to easily make the thickness of the phosphor layer 15 uniform.

Thus, the manganese activated zinc silicate phosphor of the first embodiment can be used to form the green phosphor layer 15G which does not have many cavities in its interior, is compact and high in packing density, and has a uniformly smooth surface without irregularity. Therefore, irregular reflection of light emission from the phosphor and a resulting loss of light are prevented, and luminance of the PDP can be improved. And, when the surface of the green phosphor layer 15G becomes smooth, a discharge space becomes large, and luminance is also improved accordingly.

The manganese activated zinc silicate phosphor of the first embodiment is also suitable as a phosphor for excitation by low-voltage electron beams having an acceleration voltage of 15 kV or less.

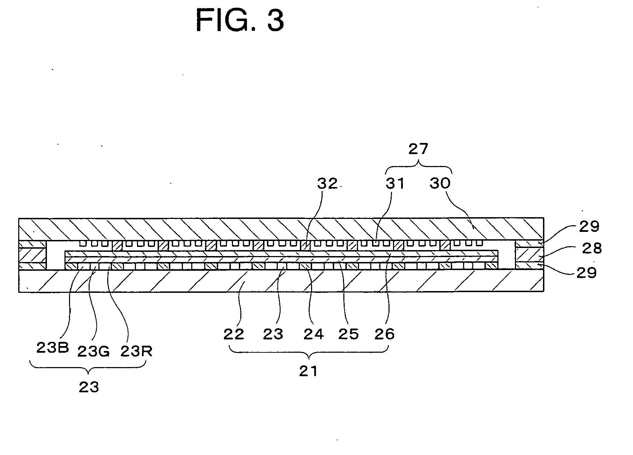

Fig. 3 is a sectional view showing the structure of an FED according to a third embodiment of the invention. In Fig. 3, reference numeral 21 denotes a face plate which has a phosphor layer 23 formed on a transparent substrate such as a glass substrate 22. This phosphor layer 23 has a structure consisting of a blue phosphor layer 23B, a green phosphor layer 23G and a red phosphor layer 23R formed in correspondence with pixels, and they are separated by a light-absorbing layer 24 which is formed of a black conductive material. The green phosphor layer 23G among the individual color phosphor layers configuring the phosphor layer 23 is formed of the manganese activated zinc silicate phosphor according to the first embodiment described above.

The blue phosphor layer 23B and the red phosphor layer 23R can be formed of individual kinds of phosphors which are known as phosphors for excitation by low-voltage electron beams. It is desirable that the respective color phosphor layers 23 have the same thickness so that no difference in level is caused between the phosphor layers 23.

The blue phosphor layer 23B, the green phosphor layer 23G, the red phosphor layer 23R and the light-absorbing layer 24 which separates them are sequentially formed repeatedly in a horizontal direction, and a portion where these layers are present becomes an image display region. For arrangement of this phosphor layer 23 and the light-absorbing layer 24, various patterns such as a dot pattern, a stripe pattern and the like can be applied.

A metal back layer 25 is formed on the phosphor layer 23. The metal back layer 25 is made of a metal film such as an Al film, and reflects light, which travels in a direction of a rear plate to be described later, in the light generated by the phosphor layer 23 to improve luminance. And, the metal back layer 25 has a function to prevent electric charges from being accumulated by giving the image display region of the face plate 11 with electrical conductivity, and serves as an anode electrode for an electron source of the rear plate. A getter film 26 which is formed of an evaporative getter material of Ba or the like is formed on the metal back layer 25. Gas generated during use is effectively adsorbed by the getter film 26.

The face plate 21 and a rear plate 27 are disposed to face each other, and the space between them is sealed airtight with a support frame 28. The support frame 28 is bonded to the face plate 21 and the rear plate 27 with a bonding material 29 which is frit glass, In or its alloy, to configure a vacuum vessel as an envelope.

The rear plate 27 has a substrate 30 which is an insulating substrate such as a glass substrate and a ceramics substrate or a Si substrate, and plural electron emission elements 31 formed on the substrate 30. The electron emission element 31 has, for example, a field emission type cold cathode, a surface conduction type electron emission element and the like, and wiring (not shown) is disposed on the surface of the rear plate 27 where the electron emission elements 31 are formed. Besides, a reinforcing member (spacer) 32 is disposed as required between the face plate 21 and the rear plate 27 in order to prevent deflection.

In this color FED, the manganese activated zinc silicate phosphor having the above-described aspect ratio of 1.0 to 1.4 is used as the green phosphor which emits light by irradiation of the electron beams, so that the green phosphor layer 23G which is compact and has high packing density, and uniform flatness without irregularities on the surface is formed, and light emission with high luminance can be obtained. Besides, voltage resistance characteristic is improved substantially because a fluorescent screen with high smoothness and flatness can be obtained.

The fourth embodiment of the invention is a method for producing a manganese activated zinc silicate phosphor which is substantially represented by a chemical formula Zn₂SiO₄:Mn, and comprises burning a phosphor material containing elements constituting a host material of the phosphor and an activator or compounds containing the elements by heating in a heating furnace while flowing or rotating, to obtain a manganese activated zinc silicate phosphor having an afterglow time of less than 9 ms.

In the fourth embodiment, a rotary heating furnace can be used for burning. First, rawmaterial powders for the phosphor are weighed so to have a desired composition (Zn₂SiO₄:Mn) and thoroughly mixed by a ball mill or the like. Here, an activating amount of Mn is desirably 3 to 13 mol% with respect to a mother material of phosphor (Zn₂SiO₄) in order to obtain good emission chromaticity and high luminance as the green phosphor. As the phosphor material (the phosphor raw material), carbonate, nitrate, oxalate or hydroxide which can be easily decomposed to an oxide by heating can be used other than the oxide.

Then, the phosphor material mixture is supplied into a tubular heating furnace which rotates about its center axis (rotates on its axis) and heated to a prescribed burning temperature in the atmosphere. Specifically, the phosphor material is heated for burning while being flown or rotated by the rotations of the heating furnace at a temperature of, for example, 1100 to 1300 °C for 0.5 to 4 hours. Then, the burned material is discharged from the heating furnace and cooled. Thus, a manganese activated zinc silicate phosphor, which emits green light emitted upon excitation by vacuum ultraviolet rays or excitation by low-voltage electron beams, having an afterglow time of less than 9 ms of light emission can be obtained.

In the fourth embodiment, an inert gas atmosphere of argon, nitrogen or the like can be kept in the interior of the heating furnace. The heating furnace desirably has a rotating speed of 0.5 to 50 rotations per minute to allow uniform heating from the entire circumference. If the rotating speed exceeds 50 rotations per minute, it is hard to control to a required burning time period. Besides, it can be configured to heat for a necessary and enough time period in a transfer process by disposing the heating furnace to incline with respect to a horizontal direction and continuously moving the phosphor material from above to below in the heating furnace. The inclined angle of the heating furnace with respect to the horizontal can be adjusted depending on the length and the rotating speed of the heating furnace to keep the phosphor material in the furnace for a time period sufficient for burning.

The afterglow time of the manganese activated zinc silicate phosphor obtained in the fourth embodiment can be adjusted by varying the heating conditions of the heating furnace, namely the heating temperatures, the heating time periods, the inclined angle of the heating furnace with respect to the horizontal, the rotating speed, and the like. The production of the manganese activated zinc silicate phosphor according to the fourth embodiment can be performed by using the burning apparatus shown in Fig. 1.

According to the fourth embodiment using the above apparatus, the phosphor material are heated in the heating furnace while being flown or rotated continuously by the rotating motion of the furnace about its axis and applied with uniform thermal energy from the entire outer circumference of the phosphor materials. As a result, the manganese activated zinc silicate phosphor which has a homogeneous composition as a whole from the surface to the inside and emits green light upon excitation by vacuum ultraviolet rays or excitation by low-voltage electron beams is obtained. This phosphor has an afterglow time of less than 9 ms, and has a short afterglow time and good color purity in comparison with the manganese activated zinc silicate phosphor produced by a conventional burning method using a crucible. And, the manganese activated zinc silicate phosphor obtained by this embodiment has less degradation in luminance and excellent color purity by increasing an Mn activation amount in comparison with the phosphor having a shortened afterglow time.

The manganese activated zinc silicate phosphor according to the fourth embodiment is suitable as a green phosphor for excitation by vacuum ultraviolet rays. Specifically, it is suitable for a device in which ultraviolet rays (vacuum ultraviolet rays) having a short wavelength of, for example, 200 nmor less is used as light for excitation. Vacuumultraviolet rays having a wavelength of 200 nm or less are radiated by a discharge of a rare gas such as Xe gas, Xe-Ne gas or the like, and vacuum ultraviolet rays having a wavelength of 147 nm or a wavelength of 172 nm are used in practice.

The green phosphor layer is formed by using the manganese activated zinc silicate phosphor obtained by the fourth embodiment, so that a PDP having good luminance characteristics can be obtained. This PDP has the same structure as that of the PDP (AC plane discharge type PDP) shown in Fig. 2 and detailed descriptions are omitted.

For the PDP, the manganese activated zinc silicate phosphor obtained by the fourth embodiment is used as the green phosphor configuring the green phosphor layer 15G. As the blue phosphor, BaMgAl₁₀O₁₇:Eu²⁺ or the like is used, and as the red phosphor, Y₂O₃:Eu, (Y, Gd)₂O₃:Eu, YBO₃:Eu, (Y, Gd)BO₃:Eu, GdBO₃:Eu or the like is used.

To form the green phosphor layer 15G, the blue phosphor layer 15B and the red phosphor layer 15R, the manganese activated zinc silicate phosphor obtained by the fourth embodiment described above or the above-described blue phosphor or red phosphor is mixed with a binder solution, which comprises, for example, polyvinyl alcohol, n-butyl alcohol, ethylene glycol, water or the like, to prepare a paste, which is then coated on a substrate by a method such as screen printing or the like. The individual color phosphor layers can also be formed by a known slurry method. In the slurry method, the respective color phosphors are mixed with pure water, polyvinyl alcohol, a photosensitivematerial such as ammonium dichromate, a surfactant and the like to prepare a phosphor slurry, the slurry being coated by a spin coater or the like and dried, an ultraviolet ray or the like being irradiated for exposure and development to form individual color phosphor patterns.

This AC plane discharge type PDP has a plane discharge in the vicinity of the front substrate 11 within the discharge cells S, and a discharge gas mainly emits 147 nm- and 172 nm-wave length vacuum ultraviolet rays. The respective color phosphors in the phosphor layers 15 emit visible light when they are excited by the vacuum ultraviolet rays and return to the ground state.

To uniformly irradiate the ultraviolet rays to the phosphor layer 15, the phosphor layer 15 desirably has an almost uniform thickness at the individual portions. If the phosphor layer 15 has a largely variable thickness, there is a possibility of producing particles which are under the shadow of other phosphor particles and not exposed to the ultraviolet rays.

The manganese activated zinc silicate phosphor obtained by the fourth embodiment has a short afterglow time of less than 9 ms when light is emitted upon excitation by vacuum ultraviolet rays, and has good color purity and sufficiently high luminance, so that a PDP having good display characteristics can be obtained by using this phosphor as a green phosphor.

The manganese activated zinc silicate phosphor obtained by the fourth embodiment is also suitable as a phosphor excited by electron beams having low-voltage high current density with an acceleration voltage of 15 kV or less. An FED is a display device in which phosphor is excited by electron beams having low-voltage high current density This FED has the same structure as that of the FED shown in Fig. 3, and its detailed descriptions will be omitted.

In the respective color phosphor layers configuring the phosphor layer 23 of the FED, the green phosphor layer 23G is formed of the manganese activated zinc silicate phosphor obtained by the fourth embodiment. The blue phosphor layer 23B and the red phosphor layer 23R can be formed of individual kinds of phosphors which are known as the phosphors for excitation by low-voltage electron beams. It is desirable that the respective color phosphor layers 23 have the same thickness so that no difference in level is caused between the phosphor layers 23.

To form the green phosphor layer 23G, the blue phosphor layer 23B and the red phosphor layer 23R, the manganese activated zinc silicate phosphor obtained by the fourth embodiment or the known blue phosphor or red phosphor is mixed with a binder solution, which comprises, for example, polyvinyl alcohol, n-butylalcohol, ethylene glycol, water or the like, to prepare a paste, which is then coated on a substrate by a method such as screen printing or the like. The respective color phosphor layers can also be formed by a known slurry method.

This color FED has the manganese activated zinc silicate phosphor obtained by the fourth embodiment as the green phosphor which emits light upon irradiation by electron beams. And, this manganese activated zinc silicate phosphor has a short afterglow time of less than 9 ms when light is emitted upon excitation by low-voltage electron beams, and has good color purity and sufficiently high luminance, so that an FED having good display characteristics can be obtained.

Specific examples of the invention will be described below.

Examples 1 to 9 and Comparative Examples 1 and 2 As phosphor material, 30.0 g of silica (SiO₂) having the average particle diameters and aspect ratios (major axis/minor axis) shown in Table 1, 65.0 g of zinc oxide (ZnO) and 6.5 g of manganese carbonate (MnCO₃) were used and these raw material powders were mixed thoroughly. In Comparative Examples 1 and 2, non-spherical (flaky or the like) silica having an average particle diameter of 1 µm was used.

Then, the raw material mixture was charged into the heat resistant vessel of the burning apparatus shown in Fig. 1. The heat resistant vessel was disposed at inclined angles of 1 to 5° with respect to the horizontal and rotated about its axis at speeds of 0.5 to 10 rotations per minute. And, the heat resistant vessel had an air atmosphere in it. The phosphor material were heated for burning while being flown or rotated in the heat resistant vessel at temperatures of 1200 to 1250 °C for one to three hours.

The obtained burned materials were washed with an ion exchange water or the like and dried and, if necessary, sieving or the like was performed to remove coarse particles, and manganese activated zinc silicate phosphors (Zn₂SiO₄:Mn) were obtained.

Then, the obtained manganese activated zinc silicate phosphors were measured for an average particle diameter and an aspect ratio (major axis/minor axis).

The light-emitting properties of the obtained phosphor powders were measured as follows. Specifically, the phosphor powder was placed on a glass substrate having a recessed center portion and pressed from above to form a phosphor film having a thickness of 1 to 2 mm. And, a 146 nm-wave length vacuum ultraviolet ray was irradiated to the phosphor film to examine emission luminance, emission chromaticity and afterglow time.

The emission luminance was determined as a relative value with the emission luminance of Comparative Example 1 assumed to be 100 %. And, the emission chromaticity was measured by using SR-3 produced by Topcon Corporation as a chromaticity measuring device. The emission chromaticity was measured in a dark room where chromaticity at the time of light emission was not affected externally. Besides, the afterglow time was determined as a time period during which luminance after shutdown of the irradiation of the ultraviolet rays became 1/10 of the luminance immediately before the shutdown. The phosphor powders were measured for the emission luminance, emission chromaticity and afterglow time. The measured results are shown in Table 1 together with the measured results of the average particle diameters and the aspect ratios (major axis/minor axis) of the phosphors.

Then, the phosphors obtained in Examples 1 to 9 and Comparative Example 1 were used to prepare the AC type PDPs shown in Fig. 2. First, a front substrate where a transparent electrode, a bus electrode, a transparent dielectric layer and a protection layer were formed and a rear substrate where an address electrode and partition walls were formed were prepared.

And, the phosphor paste was coated on prescribed positions of the rear substrate and dried to form the respective color phosphor layers. As the green phosphor, the manganese activated zinc silicate phosphors (Zn₂SiO₄:Mn) obtained in Examples 1 to 9 and Comparative Example 1 were used, and as the red phosphor and blue phosphor, (Y, Gd)BO₃:Eu (average particle diameter of 1. 5 µm) and BaMgAl₁₀O₁₇: Eu²⁺ (average particle diameter of 2. 0 µm) obtained by an ordinary flux burning method were used. And, the individual color phosphor powders were mixed with a binder solution, which had n-butyl alcohol and ethylene glycol added to a 10 % aqueous solution of polyvinyl alcohol, to prepare phosphor pastes, and the phosphor pastes were coated in a prescribed cell interior of the rear substrate and dried by screen printing to form individual color phosphor layers.

Then, the front substrate was placed on the rear substrate where the phosphor layer was formed to seal with a mixed gas of xenon, helium and neon in the discharge cells so as to produce a PDP.

The produced PDP was checked for emission luminance and afterglow time of the green phosphor layer. The emission luminance was determined as relative luminance with the emission luminance of Comparative Example 1 assumed as 100 %. And, the afterglow time was determined as a time period over which luminance after shutdown of the irradiation of the ultraviolet rays by a discharge of a rare gas became 1/10 of the luminance immediately before the shutdown. The measured results are shown in Table 1.

Besides, the phosphors obtained in Examples 1 to 9 and Comparative Example 2 were used as the green phosphor, and as the blue phosphor, a zinc sulfide phosphor (ZnS:Ag, Al), was used and as the red phosphor, a yttrium oxide sulfide phosphor (Y₂O₂S:Eu) was used to produce the FED shown in Fig. 3.

The phosphor layer was formed by coating a slurry, which was obtained by dispersing individual color phosphors into an aqueous solution containing polyvinyl alcohol and the like, on a glass substrate by a spin-coating machine (spin coater). The rotations of the spin coater and the viscosity of the slurry were adjusted to form phosphor layers having a thickness of 10 µm. The face plate and the rear plate having plural electron emission elements were assembled with a support frame between them, and the gap between them was sealed airtight by evacuating.

The obtained FED was examined for the emission luminance and the afterglow time of the green phosphor layer. The emission luminance was measured by irradiating electron beams having an acceleration voltage of 10 kV and a current density of 2×10⁻⁵ A/mm² to the phosphor layer. And, the emission luminance of the phosphor layer at this time was determined as a relative value with the emission luminance of the Comparative Example 2 assumed as 100 %. The afterglow time was determined as a time period over which luminance after shutdown of the electron beams became 1/10 of the luminance immediately before the shutdown. And, a voltage resistance characteristic (maximum voltage resistance) was measured by a conventional method. The measured results are shown in Table 1.

**[Table 1]**

| | | E1 | E2 | E3 | E4 | E5 | E6 | E7 | E8 | E9 | CE1 | CE2 |
|---|---|---|---|---|---|---|---|---|---|---|---|---|
| Raw Material silica | Major axis/ minor axis | 1.0 | 1.0 | 1.0 | 1.05 | 1.05 | 1.05 | 1.1 | 1.1 | 1.1 | - | - |
| | Average particle diameter (µm) | 0.5 | 1.0 | 1.5 | 0.5 | 1.0 | 1.5 | 0.5 | 1.0 | 1.5 | 1.0 | 1.0 |
| Phosphor particles | Major axis/ minor axis | 1.1 | 1.1 | 1.1 | 1.1 | 1.1 | 1.1 | 1.2 | 1.2 | 1.15 | 2.0 | 3.0 |
| | Average particle diameter (µm) | 1.0 | 1.2 | 1.8 | 1.2 | 1.5 | 2.0 | 1.2 | 1.5 | 2.3 | 2.0 | 5.0 |
| Light-Emitting Properties Of powder | Luminance(%) | 101 | 103 | 105 | 102 | 106 | 108 | 100 | 105 | 110 | 100 | 100 |
| | Chromaticity (x, y) | 0.23, 0.71 | 0.23, 0.71 | 0.23, 0.71 | 0.23, 0.71 | 0.23, 0.71 | 0.23, 0.71 | 0.23, 0.71 | 0.23, 0.71 | 0.23, 0.71 | 0.23, 0.71 | 0.23, 0.71 |
| | Afterglow time (ms) | 8 | 8 | 8 | 8 | 8 | 8 | 8 | 8 | 8 | 8 | 8 |
| Properties of PDP | Emission luminance (%) | 105 | 104 | 107 | 103 | 106 | 110 | 104 | 106 | 114 | 100 | - |
| | Afterglow time (ms) | 8 | 8 | 8 | 8 | 8 | 8 | 8 | 8 | 8 | 8 | - |
| Properties of FED | Emission luminance (%) | 106 | 104 | 108 | 102 | 106 | 110 | 105 | 107 | 115 | - | 100 |
| | Afterglow time (ms) | 8 | 8 | 8 | 8 | 8 | 8 | 8 | 8 | 8 | - | 8 |
| | Discharge voltage (Kv) | 16 | 16 | 15 | 16 | 15 | 15 | 16 | 15 | 14 | - | 12 |

| | | | | | | | | | | | | |
|---|---|---|---|---|---|---|---|---|---|---|---|---|
| E1=Example 1; E2=Example 2; E3=Example 3; E4=Example 4; E5=Example 5; E6=Example 6; E7=Example 7; E8=Example 8; E9=Example 9; CE1=Comparative Example 1; CE2=Comparative Example 2 | | | | | | | | | | | | |

As apparent from Table 1, the manganese activated zinc silicate phosphors obtained in Examples 1 to 9 were configured of almost spherical particles having an aspect ratio (a major-to-minor axis ratio) of 1.0 to 1.4, and green light emission having high luminance, good emission chromaticity and sufficiently short afterglow time was made upon excitation by the vacuum ultraviolet rays. And, where these phosphors were used to form the green phosphor layer, a PDP having high emission luminance and good light-emitting properties could be obtained.

And, the manganese activated zinc silicate phosphors obtained in Examples 1 to 9 had high emission luminance and sufficiently short afterglow time when electron beams having low acceleration voltage (15 kV or less) and high current density were irradiated, so that high luminance and good light-emitting properties could be obtained by using these phosphors to configure the green phosphor layer of the FED. Besides, maximum voltage resistance was high, and voltage resistance characteristic was excellent.

### Examples 10 to 18

As phosphor material, 30. 0 g of silica (SiO₂), 65.0 g of zinc oxide (ZnO) and 6. 5 g of manganese carbonate (MnCO₃) were mixed thoroughly and charged into the heat resistant vessel of the burning apparatus shown in Fig. 1. The heat resistant vessel was disposed at inclined angles of 1 to 5° with respect to the horizontal and rotated about its axis at speeds of 0.5 to 10 rotations per minute. And, the heat resistant vessel had an air atmosphere in it. The phosphor material were heated for burning while being flown or rotated in the heat resistant vessel at temperatures of 1200 to 1250 °C for one to three hours. Heating conditions (heating temperatures, heating time periods, and rotating speeds) of the burning apparatus are shown in Table 2.

Then, the obtained burned materials were washed with an ion exchange water or the like and dried and, if necessary, sieving or the like was performed to remove coarse particles, and manganese activated zinc silicate phosphors (Zn₂SiO₄:Mn) having the average particle diameters shown in Table 2 were obtained.

And, as Comparative Example 3, the same raw material mixture as those of Examples 10 to 18 was charged in an alumina crucible and heated for burning in the atmosphere at a temperature of 1250 °C for four hours to obtain a manganese activated zinc silicate phosphor having an average particle diameter of 2 µm. As Comparative Example 4, a raw material mixture which had an Mn activation amount increased to 2 mol% or more was heated for burning by using the crucible under the same conditions as those of Comparative Example 1 to obtain a manganese activated zinc silicate phosphor having an average particle diameter of 2 µm.

Then, the phosphor powders obtained in Examples 10 to 18 and Comparative Examples 3 and 4 were measured for light-emitting properties as described below. Specifically, the phosphor powder was placed on a glass substrate having a recessed center portion and pressed from above to form a phosphor film having a thickness of 1 to 2 mm. And, a 146 nm-wave length vacuum ultraviolet ray was irradiated to the phosphor film to examine emission luminance, emission chromaticity and afterglow time.

The emission luminance was determined as a relative luminance with the emission luminance of the phosphor powder of Comparative Example 3 assumed as 100 %. And, the emission chromaticity was measured by using SR-3 produced by Topcon Corporation as a chromaticity measuring device. The emission chromaticity was measured in a dark room where chromaticity at the time of light emission was not affected externally. Besides, the afterglow time was determined as a time period during which luminance after shutdown of the irradiation of the ultraviolet rays became 1/10 of the luminance immediately before the shutdown. The phosphor powders were measured for the emission luminance, emission chromaticity and afterglow time, and the measured results of the emission luminance, emission chromaticity and afterglow times of the phosphor powders are shown in Table 2.

Then, the phosphors obtained in Examples 10 to 18 and Comparative Examples 3 and 4 were used to produce the AC type PDPs shown in Fig. 2 in the same manner as in Examples 1 to 9. And, the produced PDPs were checked for emission luminance and afterglow time of the green phosphor layer. The emission luminance was determined as relative luminance with the emission luminance of the green phosphor layer of Comparative Example 3 assumed as 100%. And, the afterglow time was determined as a time period during which luminance after shutdown of the irradiation of the ultraviolet rays by a discharge of a rare gas became 1/10 of the luminance immediately before the shutdown. The measured results are shown in Table 2.

Besides, the phosphors obtained in Examples 10 to 18 and Comparative Examples 3 and 4 were used as the green phosphor, zinc sulfide phosphor (ZnS:Ag, Al) was used as the blue phosphor, and yttrium oxide sulfide phosphor (Y₂O₂S:Eu) was used as the red phosphor, and the FED shown in Fig. 3 was produced in the same manner as in Examples 1 to 9.

Then, the green phosphor layers of the obtained FEDs were checked for emission luminance and afterglow time. The emission luminance was measured by irradiating electron beams having acceleration voltage of 10 kV and a current density of 2×10⁻⁵ A/mm² to the phosphor layer. The emission luminance of the green phosphor layer at this time was determined as a relative value with the emission luminance of Comparative Example 3 assumed as 100%. The afterglow time was determined as a time period over which luminance after shutdown of the electron beams became 1/10 of the luminance immediately before the shutdown. The measured results are shown in Table 2.

**[Table 2]**

| | | E10 | E11 | E12 | E13 | E14 | E15 | E16 | E17 | E18 | CE3 | CE4 |
|---|---|---|---|---|---|---|---|---|---|---|---|---|
| Heating conditions | Heating temperature(°C) | 1200 | 1200 | 1250 | 1200 | 1250 | 1250 | 1200 | 1250 | 1250 | 1250 | 1250 |
| | Heating time (hr) | 1.0 | 1.5 | 1.0 | 2.0 | 1.5 | 2.0 | 1.5 | 1.0 | 2.0 | 4.0 | 4.0 |
| | Rotating speed (rotations/min) | 3 | 5 | 3 | 8 | 5 | 3 | 4 | 4 | 4 | - | - |
| Phosphor | Average particle diameter (µm) | 1.0 | 1.2 | 1.8 | 1.2 | 1.8 | 2.0 | 1.2 | 1.5 | 1.8 | 2.0 | 2.0 |
| Light-Emitting Properties Of powder | Luminance(%) | 95 | 95 | 96 | 100 | 103 | 107 | 100 | 101 | 100 | 100 | 90 |
| | Chromaticity (x, y) | 0.25, 0.69 | 0.25, 0.69 | 0.25, 0.69 | 0.23, 0.71 | 0.23, 0.71 | 0.23, 0.71 | 0.24, 0.70 | 0.24, 0.70 | 0.24, 0.70 | 0.23, 0.71 | 0.26, 0.67 |
| | Afterglow time (ms) | 5 | 5 | 5 | 7 | 7 | 7 | 6 | 6 | 6 | 9 | 5 |
| Properties of PDP | Emission luminance (%) | 97 | 98 | 99 | 101 | 103 | 107 | 101 | 103 | 102 | 100 | 90 |
| | Afterglow time (ms) | 5 | 5 | 5 | 7 | 7 | 7 | 6 | 6 | 6 | 9 | 5 |
| Properties of FED | Emission luminance (%) | 96 | 98 | 100 | 100 | 102 | 109 | 102 | 103 | 102 | 100 | 90 |
| | Afterglow time (ms) | 5 | 5 | 5 | 7 | 7 | 7 | 6 | 6 | 6 | 9 | 5 |

| | | | | | | | | | | | | |
|---|---|---|---|---|---|---|---|---|---|---|---|---|
| E10=Example 10; E11=Example 11; E12=Example 12; E13=Example 13; E14=Example 14; E15=Example 15; E16=Example 16; E17=Example 17; E18=Example 18; CE3=Comparative Example 3; CE4=Comparative Example 4 | | | | | | | | | | | | |

As apparent from Table 2, the manganese activated zinc silicate phosphors obtained in Examples 10 to 18 could show green light emission having high luminance and good chromaticity upon excitation by vacuum ultraviolet rays. This light emission had an afterglow time of less than 9 ms, which was shorter than that obtained by the burning method using an ordinary crucible. And, where this phosphor was used to form the green phosphor layer, a PDP having a short afterglow time of less than 9 ms, high emission luminance and excellent light-emitting properties could be obtained. And, when the manganese activated zinc silicate phosphors obtained in Examples 10 to 18 were used to form the green phosphor layer of the FED, light emission with a short afterglow time of less than 9 ms and high luminance could be obtained.

### Industrial Applicability

Using the phosphor of the invention, a homogeneous and compact phosphor layer with high packing density can be obtained. Therefore, when this phosphor is used to form the green phosphor layer, a PDP having high emission luminance and good light-emitting properties upon excitation by vacuum ultraviolet rays can be obtained. And, a phosphor layer having high emission luminance and excellent surface smoothness and flatness can be formed when excited by low-voltage electron beams having an acceleration voltage of 15 kV or less. Thus, an FED having high luminance and excellent voltage resistance characteristic can be obtained.

Besides, according to the producing process of the present invention, a green phosphor having high emission luminance and an afterglow time of less than 9 ms upon excitation by vacuum ultraviolet rays can be obtained, and this phosphor is suitable as a phosphor for the PDP. And, a green phosphor having high emission luminance and a short afterglow time of less than 9 ms upon excitation by low-voltage electron beams having an acceleration voltage of 15 kV or less can be obtained, and this phosphor is also useful as a phosphor for the FED.

## Claims

1. A phosphor, comprising a manganese activated zinc silicate phosphor, wherein the manganese activated zinc silicate phosphor is comprised of particles having a major-to-minor axis ratio of 1.0 to 1.4.

2. A method for producing a phosphor including a manganese activated zinc silicate phosphor, comprising:
burning a phosphor material containing elements constituting a host material of the phosphor and an activator or compounds containing the elements by heating in a heating furnace while flowing or rotating them to obtain manganese activated zinc silicate phosphor particles having a major-to-minor axis ratio of 1.0 to 1.4.

3. The method for producing a phosphor according to claim 2, wherein the phosphor material is burned by heating in a heating furnace rotating about its axis.

4. The method for producing a phosphor according to claim 2 or 3, wherein the phosphor material contains silica particles having a major-to-minor axis ratio of 1.0 to 1.2.

5. A method for producing a phosphor including a manganese activated zinc silicate phosphor and emits green light upon excitation by vacuum ultraviolet rays, comprising:
burning a phosphor material containing elements constituting a host material of the phosphor and an activator or compounds containing the elements by heating in a heating furnace while flowing or rotating them to obtain a manganese activated zinc silicate phosphor having an afterglow time of less than 9 ms.

6. The method for producing a phosphor according to claim 5, wherein the phosphor material is burned by heating in a heating furnace rotating about its axis.

7. A method for producing a phosphor including a manganese activated zinc silicate phosphor and emits green light upon excitation by electron beams having an acceleration voltage of 15 kV or less, comprising:
burning a phosphor material containing elements constituting a host material of the phosphor and an activator or compounds containing the elements by heating in a heating furnace while flowing or rotating them to obtain a manganese activated zinc silicate phosphor having an afterglow time of less than 9 ms.

8. The method for producing a phosphor according to claim 7, wherein the phosphor material is burned by heating in a heating furnace rotating about its axis.

9. A light emitting device, having a light emitting layer containing the phosphor according to claim 1 as a green phosphor.

10. The light emitting device according to claim 9, further comprising light emitting layers respectively including a blue phosphor and a red phosphor for excitation by vacuum ultraviolet rays in addition to the green phosphor, and a unit for irradiating the vacuum ultraviolet rays to the light emitting layers, to configure a display portion of a plasma display panel.

11. The light emitting device according to claim 9, further comprising light emitting layers respectively including a blue phosphor and a red phosphor for excitation by low-voltage electron beams in addition to the green phosphor, and an electron emission source for irradiating electron beams having an acceleration voltage of 15 kV or less to the light emitting layers, to configure a display portion of a field emission display.

12. A light emitting device, comprising a light emitting layer including the manganese activated zinc silicate phosphor produced by the method for producing a phosphor according to claim 5 as a green phosphor.

13. The light emitting device according to claim 12, further comprising light emitting layers respectively including a blue phosphor and a red phosphor for excitation by vacuum ultraviolet rays in addition to the green phosphor, and a unit for irradiating the vacuum ultraviolet rays to the light emitting layers, to configure a display portion of a plasma display panel.

14. A light emitting device, comprising a light emitting layer including the manganese activated zinc silicate phosphor produced by the method for producing a phosphor according to claim 7 as a green phosphor.

15. The light emitting device according to claim 14, further comprising light emitting layers respectively including a blue phosphor and a red phosphor for excitation by low-voltage electron beams in addition to the green phosphor, and an electron emission source for irradiating electron beams having an acceleration voltage of 15 kV or less to the light emitting layers, to configure a display portion of a field emission display.
